**Europäisches Patentamt**

(19) **European Patent Office**

**Office européen des brevets**

(11) Veröffentlichungsnummer: **0 160 199**
**B1**

(12) # EUROPÄISCHE PATENTSCHRIFT

(45) Veröffentlichungstag der Patentschrift:
08.06.88

(51) Int. Cl.⁴: **F 16 H 3/30**

(21) Anmeldenummer: **85103115.3**

(22) Anmeldetag: **18.03.85**

(54) Mehrstufiges Schaltgetriebe, insbesondere Vorwahlschaltgetriebe für Werkzeugmaschinen.

(30) Priorität: **02.05.84 DE 3416232**

(43) Veröffentlichungstag der Anmeldung:
**06.11.85 Patentblatt 85/45**

(45) Bekanntmachung des Hinweises auf die Patenterteilung:
**08.06.88 Patentblatt 88/23**

(84) Benannte Vertragsstaaten:
**AT BE DE FR GB IT**

(56) Entgegenhaltungen:
**CH-A-324 282**
**CH-A-377 164**
**DE-A-2 427 251**
**DE-B-1 221 069**
**FR-A-462 203**
**FR-A-2 323 930**
**GB-A-690 971**

(73) Patentinhaber: **Weiler Werkzeugmaschinen,
Postfach 1140, D-8522 Herzogenaurach (DE)**

(72) Erfinder: **Rösch, Friedrich, Dipl.- Ing.,
Laufamholzstrasse 197, D-8500 Nürnberg 30 (DE)**

(74) Vertreter: **Popp, Eugen, Dr., MEISSNER, BOLTE &
PARTNER Widenmayerstrasse 48 Postfach 86 06
24, D-8000 München 86 (DE)**

LIBER, STOCKHOLM 1988

## Beschreibung

Die Erfindung betrifft ein mehrstufiges Schaltgetriebe, insbesondere Vorwahlschaltgetriebe für Werkzeugmaschinen, nach dem Oberbegriff des Anspruches 1.

Ein derartiges Schaltgetriebe ist aus der FR-A-462 203 bekannt. Die bekannte Konstruktion ist hinsichtlich der Bestückung von Antriebs- und Abtriebswelle mit ortsfesten und längsverschieblich gelagerten Zahnrädern relativ aufwendig. Sämtliche Zahnräder sind unterschiedlich als ausgehölte Stirnzahnräder ausgebildet. Eine rationelle Getriebefertigung erlaubt das bekannte Schaltgetriebe nicht.

Die CH-A-377 164 zeigt ein mehrstufiges Getriebe mit Festrädern und Losrädern, die mit den Festrädern immer in Eingriff stehen und die über Kupplungen mit den Wellen in Verbindung gebracht werden können, wobei die Antriebswelle und die Abtriebswelle jeweils in gleicher Reihenfolge mit den Festrädern und den Losrädern bestückt sind und wobei diese Wellen im Getriebegehäuse spiegelbildlich zueinander angeordnet sind. Nachteilig bei dieser Konstruktion ist jedoch die Herstellung des gewünschten Übersetzungsverhältnisses mittels Kupplungen, welche den konstruktiven Aufwand erhöhen und den Wirkungsgrad des Schaltgetriebes herabsetzen. Letzteres ist insbesondere durch den ständigen Eingriff sämtlicher Räder bedingt, der darüber hinaus zu einer relativ hohen Geräuschentwicklung beiträgt.

Der vorliegenden Erfindung liegt die Aufgabe zugrunde, ein mehrstufiges Schaltgetriebe der eingangs genannten Art zu schaffen, das sich durch einen minimalen Konstruktionsaufwand, minimale Geräuschentwicklung und einfachste Bedienung auszeichnet.

Diese Aufgabe wird erfindungsgemäß durch die kennzeichnenden Merkmale des Anspruches 1 gelöst.

Unter Beibehaltung der Vorteile des bekannten Getriebes nach der FR-A-462 203 ermöglicht die erfindungsgemäß vorgesehene baugleiche Ausbildung von Antriebs- und Abtriebswelle eine äußerst rationelle Getriebefertigung. Des weiteren führt die erfindungsgemäße Konstruktion zu einer erheblichen Vereinfachung der Bedienung. Es sind nur noch zwei Betätigungselemente erforderlich, nämlich ein Vorwählschalter sowie ein Schalter zur Verschiebung des vorgewählten Zahnrades auf der Antriebs- oder Abtriebswelle. Dementsprechend ist neben den vorteilhaften konstruktiven Details nach den Ansprüchen 2 bis 4 noch von besonderer Bedeutung der Vorwähl- und Schaltmechanismus nach den Ansprüchen 5 bis 12, mittels dem man auch bei einem 6- oder mehrstufigen Getriebe mit nur zwei Betätigungselementen zur Umschaltung auskommt.

Nachstehend wird eine bevorzugte Ausführungsform eines erfindungsgemäß ausgebildeten achtstufigen Vorwahlschaltgetriebes für Drehmaschinen anhand der beigefügten Zeichnung näher beschrieben. Es zeigen:

Fig. 1 ein erfindungsgemäß ausgebildetes achtstufiges Vorwahlschaltgetriebe im Schnitt längs der durch die übereinander angeordneten Antriebs- und Abtriebswelle gebildeten Ebene;

Fig. 2 das Getriebe nach Fig. 1 im Schnitt längs Linie II-II in Fig. 1;

Fig. 3 das Getriebe nach Fig. 1 im Schnitt längs Linie III-III in Fig. 1; und

Fig. 4 das Getriebe nach den Fig. 1 bis 3 teilweise im Schnitt längs Fig. IV-IV in Fig. 2, teilweise in Ansicht.

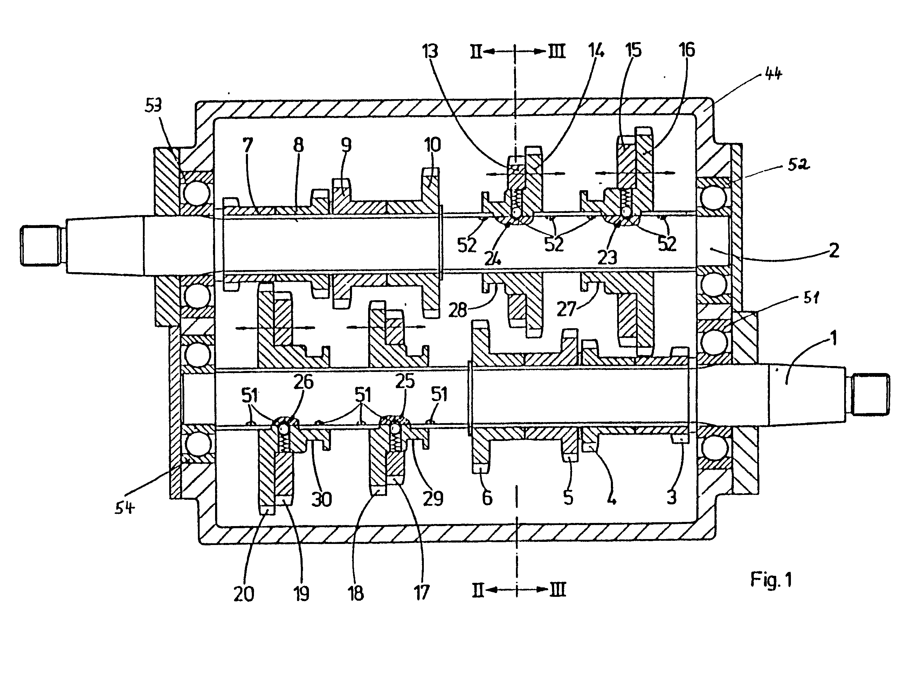

Das in den Fig. 1 bis 4 dargestellte achtstufige Vorwahlschaltgetriebe umfaßt ein Getriebegehäuse 44, in dem zwei Wellen, nämlich eine Antriebewelle 1 sowie eine Abtriebswelle 2 parallel zueinander drehbar gelagert sind. Die Wellen 1 und 2 sind jeweils kugelgelagert. Die Wellen-Kugellager sind in Fig. 1 mit den Bezugszeichen 51, 52, 53, 54 gekennzeichnet.

Die Antriebs- und Abtriebswelle sind jeweils in der gleichen Weise mit Zahnrädern 3, 4, 5, 6, 17, 18, 19, 20 bzw. 7, 8, 9, 10, 13, 14, 15, 16 bestückt, wobei jeweils vier Zahnräder auf der zugeordneten Welle 1 bzw. 2 ortsfest angeordnet und weitere vier Zahnräder drehfest, jedoch längsverschieblich gelagert sind. Die beiden Wellen 1 und 2 ragen aus dem Getriebegehäuse 44 jeweils an gegenüberliegenden Seiten heraus zum Anschluß eines nicht dargestellten Kraftübertragungsmittels. Die vier ortsfest angeordneten Zahnräder 3, 4, 5, 6 bzw. 7, 8, 9, 10 befinden sich jeweils auf derjenigen Wellenhälfte, die sich an den aus dem Getriebegehäuse 44 herausragenden Wellenabschnitt anschließt. Auf der jeweils anderen Wellenhälfte sind die längsverschieblich gelagerten Zahnräder 13, 14, 15, 16 bzw. 17, 18, 19, 20 angeordnet, wobei diese jeweils zu einem Räderpaar bzw. zwei Zahnräder umfassenden Räderblock zusammengefaßt sind und als solche, d. h. blockweise, in Längsrichtung der Wellen 1 bzw. 2 aus einer Freilauf-Stellung in eine gewünschte Schaltstellung und umgekehrt versetzbar sind. In ihrer Freilauf-Stellung sind die erwähnten Räderpaare durch Rastmittel, nämlich jeweils durch einen zugeordneten Kugelrastmechanismus 23, 24 bzw. 25, 26 bekannter Bauart arretierbar. In gleicher Weise sind die Räderpaare auch in ihren Schaltstellungen durch dieselben Kugelrastmechanismen arretierbar, wobei die jeweils federbelasteten Rastkugeln Teil der Räderpaare sind und in auf den Wellen 1 und 2 angeordneten Bohrungen 51 bzw. 52 einrasten. Die Rastbohrungen 51, 52 bestimmen die Freilauf- bzw. Schaltstellungen der Räderpaare 13 ... 20 auf den beiden Wellen 1 und 2.

Wie Fig. 1 erkennen läßt, befinden sich die Räderpaare 13, 14; 15, 16; 17, 18 und 19, 20 in ihrer Freilauf-Stellung jeweils zwischen den beiden zugeordneten, auf der gegenüberliegenden Welle 1 bzw. 2 ortsfest angeordneten Zahnrädern 3, 4 bzw. 5, 6 bzw. 7, 8 bzw. 9, 10. Wie oben dargelegt, sind die bestückten Wellen 1 und 2 jeweils baugleich ausgeführt und im Getriebegehäuse 44 spiegelbildlich zueinander angeordnet. Die Bestückung der Wellen 1 und 2 mit den ortsfest angeordneten und längsverschieblich gelagerten Zahnrädern erfolgt jeweils derart, daß die Zähnezahl der Zahnräder von einem Ende beginnend zum anderen Ende der Welle zunimmt, z. B. wie folgt: Z-20, 25, 29, 34, 39, 44, 50, 53. Dies bedeutet, daß aufgrund der erwähnten spiegelbildlichen Anordnung der Zahnräder im Getriebegehäuse 44 Zahnräder mit folgender Zähnezahl miteinander in Eingriff bringbar sind:

$Z_{Antrieb} = 20$ und $Z_{Abtrieb} = 53$;
$Z_{Antrieb} = 25$ und $Z_{Abtrieb} = 50$;
$Z_{Antrieb} = 29$ und $Z_{Abtrieb} = 44$;
$Z_{Antrieb} = 34$ und $Z_{Abtrieb} = 39$;
$Z_{Antrieb} = 39$ und $Z_{Abtrieb} = 34$;
$Z_{Antrieb} = 44$ und $Z_{Abtrieb} = 29$;
$Z_{Antrieb} = 50$ und $Z_{Abtrieb} = 25$; und
$Z_{Antrieb} = 53$ und $Z_{Abtrieb} = 20$.

Durch die erwähnten Radpaarungen sind die acht Stufen des Getriebes bestimmt.

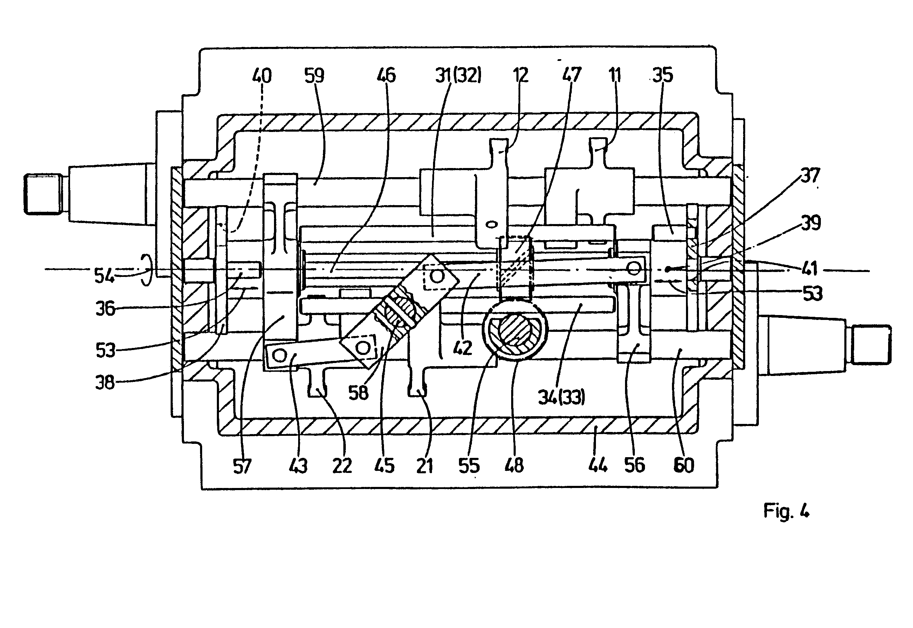

Als Schaltelemente für die Versetzung der auf Antriebs-und Abtriebswelle längsverschieblich gelagerten Zahnräder bzw. Zahnradpaare dienen Schaltgabeln 11, 12 bzw. 21, 22, die in den Zahnrädern bzw. Räderpaaren 13, 14 bzw. 15, 16 bzw. 17, 18 bzw. 19, 20 jeweils zugeordnete Umfangsnuten 27, 28, 29 und 30 eingreifen und mit einem weiter unten noch näher beschriebenen Vorwähl- und Schaltmechanismus unter entsprechender Mitnahme der Zahnräder bzw. Räderpaare in Richtung der Antriebs- bzw. Abtriebswelle versetzbar sind. An jeder Schaltgabel 11, 12, 21, 22 ist ein sich parallel zur Antriebs- und Abtriebswelle erstreckender Betätigungsstab 31, 32, 33 bzw. 34 befestigt, der unter Verschiebung in Stablängsrichtung und damit entsprechender Mitnahme der Schaltgabel sowie der dieser zugeordneten Zahnräder 13, 14 oder 15, 16 oder 17, 18 oder 19, 20 durch einen Schaltstift 35, 36 axial beaufschlagbar ist. Die Betätigungsstäbe 31, 32, 33, 34 liegen in Stablängsrichtung gesehen im gleichen Winkelabstand voneinander auf einem gemeinsamen gedachten Kreis. Zu beiden Seiten der Betätigungsstäbe 31, 32, 33, 34 ist jeweils ein Schaltstift 35 bzw. 36 angeordnet, wobei die beiden Schaltstifte auf demselben gedachten Kreis wie die Betätigungsstäbe liegen und längs desselben schrittweise durch einen Vorwählmechanismus bewegbar sind. Die beiden Schaltstifte 35, 36 sind jeweils auf einer drehbar gelagerten Schalttrommel bzw. Schaltscheibe 37 bzw. 38 angeordnet, deren gemeinsame Drehachse 39 mit der Achse des gedachten Kreises, auf dem die Betätigungsstäbe in Richtung ihrer Längsachsen gesehen liegen, zusammenfällt. Die Anordnung der beiden Schaltstifte auf den beiden Schaltscheiben 37, 38 ist so, daß sie um den halben Winkelabstand zwischen zwei benachbarten Betätigungsstäben 31, 32, 33, 34 versetzt zueinander liegen. Durch den noch näher zu beschreibenden Vorwählmechanismus sind die Schaltscheiben 37, 38 und damit die beiden Schaltstifte 35, 36 bei jedem Schaltschritt um diesen Winkelabstand weiterbewegbar. Im konkreten Fall beträgt der Schaltwinkel 45°. Der Winkelabstand zwischen zwei benachbarten Betätigungsstäben beträgt dementsprechend 90°. Die beiden Schaltscheiben 37, 38 sind durch einen noch näher zu beschreibenden Schaltmechanismus in Richtung ihrer gemeinsamen Drehachse 39 aufeinander zu bzw. voneinander weg bewegbar, und zwar synchron, wodurch einer der beiden Schaltstifte 35 oder 36 mit dem jeweils angewählten Betätigungsstab in längsverschiebenden Eingriff bringbar ist, während der gegenüberliegend angeordnete Schaltstift 36 bzw. 35 zwischen zwei benachbarten Betätigungsstäben ins Leere geht, bzw. die Schaltstifte 35, 36 in ihre Wählstellung gelangen. Die Axialbewegung der Schaltscheiben 37, 38 bzw. Schaltstifte 35, 36 ist in Fig. 4 durch die Doppelpfeile 53 gekennzeichnet. Jedem Schaltstift 35 bzw. 36 ist auf der gegenüberliegend angeordneten Schaltscheibe 38 bzw. 37 eine Durchgangsborhung 40 bzw. 41 zugeordnet, durch die hindurch der durch den Schaltstift 35 bzw. 36 jeweils axial bewegte Betätigungsstab ausweichen kann. Bei dem hier dargestellten Ausführungsbeispiel ist der Schaltstift 35 dem Betätigungsstab 31 zugeordnet, der mit der Schaltgabel 12 verbunden ist. Die Schaltgabel 12 greift in die dem Räderpaar 13, 14 zugeordnete Umfangsnut 28 ein. Bei gleichzeitiger Axialbewegung der beiden Schaltscheiben 37, 38 aufeinander zu wird der Betätigungsstab 31 durch den Schaltstift 35 axial beaufschlagt und in Fig. 4 unter Mitnahme der Schaltgabel 12 und damit des Räderpaares 13, 14 nach links verschoben, wobei das dem Schaltstift 35 abgewandte Ende des Betätigungsstabes 31 durch die Bohrung 40 in der gegenüberliegend angeordneten Schaltscheibe 38 hindurch ausweichen kann. Der an der Schaltscheibe 38 angeordnete Schaltstift 36 geht dabei zwischen den beiden benachbarten Betätigungsstäben 31, 34 ins Leere.

Die Schaltscheiben 37, 38 sind so angeordnet und dimensioniert daß sie bei der erwähnten Axialbewegung aufeinander zu die vom Schaltstift 35 oder 36 nicht beaufschlagten Betätigungsstäbe in einer Ausgangslage halten, insbesondere den in einer vorangegangenen Schaltstellung längsverschobenen Betätigungsstab in die Ausgangslage zurückbewegen, die der erwähnten Freilauf-Stellung der jeweils zugeordneten, auf Antriebs- und Abtriebswelle längsverschieblich gelagerten Zahnräder bzw. Räderpaare entspricht.

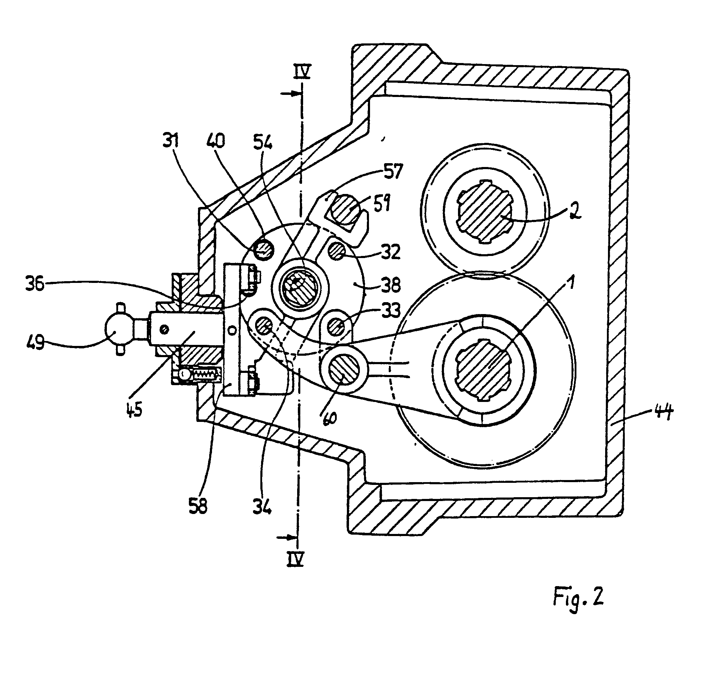

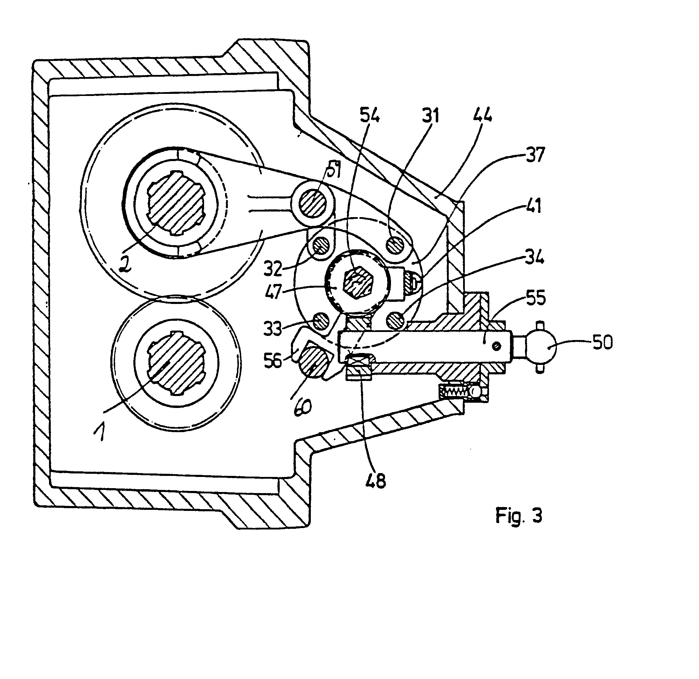

Bei der in den Fig. 1 bis 4 dargestellten Stellung der Schaltscheiben 37, 38 bzw. Schaltstifte 35, 36 wird also die Schaltgabel 12 und damit das Räderpaar 13, 14 nach links verschoben, wodurch das auf der Abtriebswelle 2 längsverschieblich gelagerte Zahnrad 13 mit dem auf der Antriebswelle 1 ortsfest angeordneten Zahnrad 6 in Eingriff kommt. Durch Drehung der beiden Schaltscheiben 37, 38 in der in Fig. 4 dargestellten Stellung um 45° in Richtung des Pfeiles 54 (siehe auch Fig. 2 und 3) würde der Schaltstift 36 dem Betätigungsstab 31 zugeordnet werden. Bei Axialbewegung der beiden Schaltscheiben 37, 38 aufeinander zu würde also der Betätigungsstab 31 durch den Schaltstift 36 axial beaufschlagt und in fig. 4 nach rechts unter Mitnahme der Schaltgabel 12 und damit des dieser zugeordneten Räderpaares 13, 14 soweit verschoben werden, bis das auf der Welle 2 längsverschieblich gelagerte Zahnrad 14 mit dem auf der Welle 1 ortsfest angeordneten Zahnrad 5 in Eingriff kommt. Das dem Schaltstift 36 abgewandte Ende des Betätigungsstabes 31 würde bei der letztgenannten Stellung durch die Bohrung 41 in der Schaltscheibe 37 hindurch ausweichen. Auf die beschriebene Art und Weise lassen sich sämtliche auf den beiden Wellen 1 und 2 angeordneten Zahnräder wechselweise miteinander in Eingriff bringen unter Ausbildung der oben genannten Übersetzungsverhältnisse (acht Stufen).

Die beiden Schaltscheiben 37, 38 sind auf einer die gemeinsame Drehachse 39 definierenden Welle 46 drehfest, jedoch längsverschieblich gelagert. Zu diesem Zweck weist die Welle 46 zumindest im Axialverschiebungsbereich der beiden Schaltscheiben 37, 38 einen sechseckigen Querschnitt auf. Zur schrittweisen Verdrehung der Welle 46 und damit der Schaltscheiben 37, 38 bzw. Schaltstifte 35, 36 ist auf der Welle 46 ein Schraubenrad 47 befestigt, das mit einem Schraubenrad 48 in Eingriff steht, dessen aus dem Getriebegehäuse 44 herausgeführte Drehachse 55 sich im rechten Winkel zur Welle 46 erstreckt. Am aus dem Getriebegehäuse 44 herausragenden Abschnitt der Drehachse 55 ist ein in Fig. 3 nur teilweise dargestellter Vorwählhebel 50 befestigt. Das Schraubenradgetriebe 47, 48 sowie die auf der Welle 46 drehfest, jedoch längsverschieblich gelagerten Schaltscheiben 37, 38 und diesen zugeordneten Schaltstifte 35, 36 einerseits und die dem Schraubenrad 48 zugeordnete Drehachse 55 samt Vorwählhebel 50 andererseits bilden den erwähnten Vorwählmechanismus.

Die beiden Schaltscheiben 37, 38 sind schließlich über Verbindungslaschen 42, 43 mit einer im Getriebegehäuse 44 drehbar gelagerten Schaltwelle 45 gekoppelt, die in gleicher Weise wie die Achse 55 durch das Getriebegehäuse 44 nach außen geführt und mit einem Schalthebel 49 verbunden ist. Dadurch wird der erwähnte Schaltmechanismus für die Axialbewegung der beiden Schaltscheiben 37, 38 samt zugeordneter Schaltstifte 35, 36 auf der Welle 46 gebildet. Entsprechend den Fig. 2 und 4 sind die Verbindungslaschen 42, 43 jeweils gelenkig an den Schaltscheiben 37, 38 zugeordneten Mitnehmern 56, 57 einerseits und an einem mit der Schaltwelle 45 drehfest verbundenen Doppelhebel 58 andererseits angeschlossen. Diese Mitnehmer 56, 57 sind jeweils an sich parallel zu den Wellen 1 und 2 erstreckenden Führungsstäben 59, 60 für die Längsführung der Schaltgabeln 11, 12 bzw. 21, 22 abgestützt. Die Mitnehmer 56, 57 sind im übrigen gegenüber den Schaltscheiben 37, 38 relativ verdrehbar, so daß sie ein schrittweises Verdrehen der Schaltscheiben 37, 38 bzw. der Schaltstifte 35, 36 um die Drehachse 39 nicht behindern.

Der Schalthebel 49 ist im übrigen in Fig. 2 ebenfalls nur teilweise dargestellt.

Es sind also zur Umschaltung nur zwei Betätigungselemente, nämlich der Schalthebel 49 und der Vorwählhebel 50, zu bedienen. Es ist ferner durch die beschriebene Mechanik sichergestellt, daß in jeder Schaltstufe nur jeweils ein einziges Radpaar miteinander in Eingriff steht mit der Folge einer minimalen Geräuschentwicklung, eines maximalen Wirkungsgrades und einer maximalen Lebensdauer des Getriebes. Durch die baugleiche Ausführung sowohl der Antriebswelle 1 als auch der Abtriebswelle 2 ist ferner eine äußerst rationelle Fertigung möglich.

Die obige Beschreibung einer erfindungsgemäß ausgebildeten Ausführungsform eines 8-stufigen Vorwahlschaltgetriebes läßt einen weiteren, hinsichtlich der Bedienung ganz beachtlichen Vorteil erkennen:

Der Vorwählmechanismus und damit die Position der Schaltstifte 35, 36 läßt sich auch während des Getriebelaufs und damit während des Betriebs der Maschine betätigen bzw. in eine andere Schaltposition verstellen. Nach einer Umschaltung des Getriebes mittels des erwähnten Schaltmechanismus wird der Schalthebel und damit die Schaltscheiben 37, 38 samt Schaltstiften 35, 36 vorzugsweise in seine Ausgangslage entsprechend Fig. 4 gebracht. Das längsverschobene Zahnrad bzw. Zahnradpaar bleibt dank der oben beschriebenen Arretierung auf der Welle 1 bzw. 2 sicher in der geschalteten bzw. versetzten Lage, so daß der Schaltmechanismus ohne Gefahr für den gewählten Zahnradeingriff in die Ausgangs- bzw. Null-Lage gebracht werden kann. Zu diesem Zweck ist es von Vorteil, wenn der Schalthebel 49 bzw. die Schaltwelle 45 gegen die Wirkung eines elastischen Elements, z. B. Torsionsfeder o. dgl., aus der Ausgangs- bzw. Null-Lage entsprechend Fig. 4 in die Schaltstellung bringbar ist. Dann ist gewährleistet, daß der Schaltmechanismus nach der Umschaltung selbsttätig in die Ausgangs- bzw. Null-Lage zurückkehrt. Der Vorwählmechanismus ist damit frei zur Bedienung.

Ferner ist bei der Erfindung von Vorteil, daß der Vorwählhebel vor- und zurückbewegbar ist, wodurch sich minimale Vorwahlwege erhalten lassen.

**Patentansprüche**

1. Mehrstufiges Schaltgetriebe, insbesondere Vorwahlschaltgetriebe für Werkzeugmaschinen, wie Drehmaschinen oder dgl., mit einer Antriebs (1)- und einer sich parallel dazu erstreckenden Abtriebs (2)-Welle, die jeweils sowohl mit ortsfest angeordneten (3, 4, 5, 6; 7, 8, 9, 10) als auch drehfest, jedoch längsverschieblich gelagerten (13, 14, 15, 16; 17, 18, 19, 20) Zahnrädern bestückt sind, wobei letztere durch zugeordnete Schaltelemente (Schaltgabeln 11, 12; 21, 22) von einer Freilauf-Stellung in eine Schaltstellung und umgekehrt versetzbar sind, derart, daß in jeder Schaltstellung jeweils nur ein einziges Zahnradpaar (3, 16; 4, 15; 5, 14; 6, 13; 7, 20; 8, 19; 9, 18 oder 10, 17), nämlich ein ortsfestes Zahnrad (3, 4, 5, 6, 7, 8, 9 oder 10) der Antriebs (1)- oder Abtriebs (2)-Welle mit einem längsverschieblich gelagerten Zahnrad (13, 14, 15, 16, 17, 18, 19 oder 20) der anderen Welle, nämlich Abtriebs (2)- oder Antriebs (1)-Welle, in Eingriff steht bzw. kämmt, dadurch gekennzeichnet, daß die Antriebs (1)- und Abtriebs (2)-Welle jeweils baugleich ausgebildet und dementsprechend in gleicher Reihenfolge mit den ortsfest angeordneten sowie drehfest, jedoch längsverschieblich gelagerten Zahnrädern (3 ... 20) bestückt sind, und daß die derart baugleich ausgebildeten Wellen (1, 2) im Getriebegehäuse (44) spiegelbildlich zueinander angeordnet sind.

2. Schaltgetriebe nach Anspruch 1, dadurch gekennzeichnet, daß die auf Antriebs (1)- und Abtriebs (2)-Welle längsverschieblich gelagerten Zahnräder (13 ... 20) in ihrer Freilauf-Stellung sowie in ihren Schaltstellungen jeweils durch Rastmittel, vorzugsweise durch einen Kugelrastmechanismus (23, 24; 25, 26) bekannter Bauart, arretierbar sind.

3. Schaltgetriebe nach Anspruch 1 oder 2, dadurch gekennzeichnet, daß die längsverschieblich gelagerten Zahnräder (13 ... 20) jeweils paarweise als Radblock versetzbar sind, wobei die Freilauf-Stellung eines solchen Radblocks (13, 14 bzw. 15, 16 bzw. 17, 18 bzw. 19, 20) jeweils zwischen zwei zugeordneten ortsfesten Zahnrädern (5, 6 bz. 3, 4 bzw. 9, 10 bzw. 7, 8 auf der anderen Welle (1 bzw. 2) liegt.

4. Schaltgetriebe nach einem der Ansprüche 1 bis 3, dadurch gekennzeichnet, daß als Schaltelemente für die Versetzung der auf Antriebs (1)- und Abtriebs (2)-Welle längsverschieblich gelagerten Zahnräder (13 ... 20) Schaltgabeln (11, 12 bzw. 21, 22) dienen, die in den Zahnrädern bzw. Radblöcken (13, 14; 15, 16; 17, 18; 19, 20) jeweils zugeordnete Umfangsnuten (27; 28; 29; 30) ein-oder an den längsverschieblich gelagerten Zahnrädern bzw. Radblöcken zugeordneten Umfangsstegen angreifen und jeweils individuell durch einen Vorwähl- und Schaltmechanismus unter entsprechender Mitnahme der Zahnräder bzw. der Radblöcke in Richtung der Antriebs (1)- bzw. Abtriebs (2)-Welle versetzbar sind.

5. Schaltgetriebe nach einem der Ansprüche 1 bis 4, dadurch gekennzeichnet, daß an jeder Schaltgabel (11, 12, 21, 22) ein sich etwa parallel zur Antriebs-(1)- bzw. Abtriebs (2)-Welle erstreckender Betätigungsstab (31, 32, 33, 34) befestigt ist, der unter Verschiebung in Stablängsrichtung und damit entsprechend der Mitnahme der Schaltgabel sowie der dieser zugeordneten Zahnräder (Radblöcke 13, 14; 15, 16; 17, 18 oder 19, 20) durch ein Schaltorgan, vorzugsweise in Form eines Schaltzapfens bzw. -stiftes (35; 36), axial beaufschlagbar ist.

6. Schaltgetriebe nach Anspruch 5, dadurch gekennzeichnet, daß die Betätigungsstäbe (31, 32, 33, 34) in Stablängsrichtung gesehen im gleichen Winkelabstand voneinander auf einem gemeinsamen gedachten Kreis liegen, und daß zu beiden Seiten der Betätigungsstäbe (31 ... 34) jeweils ein Schaltstift (35; 36) angeordnet ist, wobei die beiden Schaltstifte (35; 36) auf demselben gedachten Kreis wie die Betätigungsstäbe (31 ... 34) liegen und längs desselben durch einen Vorwählmechanismus schrittweise vor- oder zurückbewegbar sind.

7. Schaltgetriebe nach Anspruch 6, dadurch gekennzeichnet, daß die beiden Schaltstifte (35; 36) um den halben Winkelabstand zwischen zwei benachbarten Betätigungsstäben (31 ... 34) versetzt zueinander angeordnet und bei jedem Schaltschritt um diesen Winkelabstand weiterbewegbar sind, insbesondere auch während des Getriebelaufs.

8. Schaltgetriebe nach Anspruch 5 oder 6, dadurch gekennzeichnet, daß die beiden Schaltstifte (35; 36) jeweils auf einer drehbar gelagerten Schalttrommel bzw. -scheibe (37; 38) angeordnet sind, deren gemeinsame Drehachse (39) mit der Achse des gedachten Kreises, auf dem die Betätigungsstäbe (31 ... 34) - in Richtung ihrer Längsachsen gesehen - liegen, zusammenfällt, wobei die Schaltscheiben (37; 38) durch einen Schaltmechanismus in Richtung ihrer gemeinsamen Drehachse (39) aufeinander zu bzw. voneinander weg bewegbar sind, wodurch einer der beiden Schaltstifte (35; 36) mit dem jeweils angewählten Betätigungsstab in längsverschiebenden Eingriff bringbar ist, während der gegenüberliegend angeordnete Schaltstift zwischen zwei benachbarten Betätigungsstäben ins Leere geht, bzw. die Schaltstifte (35; 36) in ihre Wählstellung gelangen.

9. Schaltgetriebe nach Anspruch 8, dadurch gekennzeichnet, daß jedem Schaltstift (35 bzw. 36) auf der gegenüberliegend angeordneten Schaltscheibe (38 bzw. 37) eine Öffnung, vorzugsweise Durchgangsbohrung (40 bzw. 41), zugeordnet ist, durch die hindurch der durch den Schaltstift (35 bzw. 36) jeweils axial bewegte Betätigungsstab (31, 32, 33 oder 34) ausweichen kann.

10. Schaltgetriebe nach Anspruch 8 oder 9, dadurch gekennzeichnet, daß die aufeinander zu bewegten Schaltscheiben (37, 38) die vom Schaltstift (35 bzw. 36) nicht beaufschlagten Betätigungsstäbe in einer Ausgangslage halten, insbesondere den in einer vorangegangenen Schaltstellung längsverschobenen Betätigungsstab in die Ausgangslage zurückbewegen, die der Freilauf-Stellung der jeweils zugeordneten, auf Antriebs (1)- und Abtriebs (2)-Welle längsverschieblich gelagerten Zahnräder bzw. Radblöcke entspricht.

11. Schaltgetriebe nach einem der Ansprüche 8 bis 10,
dadurch gekennzeichnet, daß die beiden Schaltscheiben (37, 38) über Verbindungslaschen (42, 43) mit einer im Getriebegehäuse (44) drehbar gelagerten Schaltwelle (45) gekoppelt sind, die durch das Getriebegehäuse (44) nach außen geführt und mit einem Schalthebel (49) verbunden ist (Schaltmechanismus).

12. Schaltgetriebe nach einem der Ansprüche 8 bis 11,
dadurch gekennzeichnet, daß die zu beiden Seiten der Betätigungsstäbe (31-34) angeordneten Schaltscheiben (37; 38) auf einer die gemeinsame Drehachse (39) definierenden Welle (46) drehfest, jedoch längsverschieblich gelagert sind, wobei diese Welle (46) über ein Schnekken- oder Schraubengetriebe (47, 48) mit einem Vorwählorgan, vorzugsweise in Form eines Vorwählhebels 50), wirkverbunden ist.

13. Schaltgetriebe nach einem der Ansprüche 1 bis 12,
dadurch gekennzeichnet, daß es sechs- und mehrstufig, vorzugsweise achtstufig, ist.

**Claims**

1. A multi-ratio gearbox, more particulary a preselection gearbox for machine tools such as lathes or the like, the gearbox having an input shaft (1) and, extending parallel thereto, an output shaft (2) both having fixedly disposed gears (3 - 6 and 7 - 10 respectively) and gears (13 - 16 and 17 - 20 respectively) which corotate with their shafts but are longitudinally movable thereon, the longitudinally movable gears being so shiftable by associated shift elements (shift forks 11, 12; 21, 22) from a freewheel position into an engaged position and vice versa, that in every engaged position only a single gear pair (3, 16; 4, 15; 5, 14; 6, 13; 7, 20; 8, 19; 9, 18 or 10, 17). viz. a fixed gear (3 - 9 or 10) of the input shaft (1) or output shaft (2) is in engagement or meshes with a longitudinally movable gear (13 - 19 or 20) of the other shaft, viz., the output shaft (2) or input shaft (1), characterised in that the input shaft (1) and output shaft (2) are of identical construction and are correspondingly provided in the same sequence with the fixedly disposed and longitudinally movable gears (3 ... 20), and the shafts (1, 2) thus identically devised are disposed in laterally inverted relationship to one another in the gearbox casing (44).

2. A gearbox according to claim, characterised in that the longitudinally movable gears (13 ... 20) on the input shaft (1) and output shaft (2) are lockable in both of their freewheel and operative positions by catch means, preferably by a known ball catch mechanism (23, 24: 25, 26).

3. A gearbox according to claim 1 or 2, characterised in that the longitudinally movable gearwheels (13 ... 20) are shiftable in pairs as a gear cluster, the freewheel position of such a cluster (13, 14; 15, 16; 17, 18; 19, 20) being in each case disposed between two associated fixed gears (5, 6; 3, 4; 9, 10; 7, 8) on the other shaft (1 or 2).

4. A gearbox according to any of claims 1 - 3, characterised in that the shift elements for shifting the longitudinally movable gers (13 ... 20) are shift forks (11, 12 and 21, 22 respectively) which either engage in peripheral grooves (27; 28; 29; 30) in the gears or gear clusters (13, 14; 15, 16; 17, 18; 19, 20) or engage peripheral webs associated with the movable gears or gear clusters and which are shiftable in each case indivdually by a preselection and shift mechanism with appropriate movement of the gears or gear clusters in the direction of the input shaft (1) and output shaft (2).

5. A gearbox according to any of claims 1 - 4, characterised in that an actuating rod (31 - 34) extending substantially parallel to the input shaft (1) and output shaft (2) is secured to each shift fork (11, 12, 21, 22) and is actuatable axially, with a shift lengthwise of the rod and, therefore, corresponding to the displacement of the shift fork and of the gears (gear clusters 13, 14; 15, 16; 17, 18 or 19, 20) associated therewith, by a shift element, preferably in the form of a shift peg or pin (35; 36).

6. A gearbox according to claim 5, characterised in that the actuating rods (31 - 34) are, as considered lengthwise of the rod, disposed at the same angular distance apart from one another on a common imaginary circle and shift pins (35; 36) are disposed one on either side of the actuating rods (31 ... 34), the two shift pins (35; 36) being disposed on the same imaginary circle as the actuating rods (31 ... 34) and being movable stepwise along such circle to either hand by a preselection mechanism.

7. A gearbox according to claim 6, characterised in that the two shift pins (35; 36) are disposed at an offset from one another equal to half the angular distance between two adjacent actuating rods (31 ... 34) and are adapted to be stepped on by this angular distance at each shift step, more particularly while the gearbox is running.

8. A gearbox according to claim 5 or 6, characterised in that the two shift pins are disposed on a rotably mounted shift drum or shift disc (37; 38) whose common rotational axis (39) coincides with the axis of the said imaginary circle, the shift discs (37; 38) being movable towards and away from one another by a shift mechanism in the direction of their common rotational axis (39) so that one of the two shift pins (35; 36) can be brought into longitudinally displacing engagement with the selected actuation rod while the opposite shift pin moves into neutral between two adjacent actuating rods and the shift pins (35; 36) move into their selection position.

9. A gearbox according to claim 8, characterised in that an aperture, preferably a through bore (40, 41), is associated with each shift pin (35, 36) respectively) on the opposite shift disc (38, 37 respectively) and whichever actuating rod (31, 32, 33 or 34) is moved axially by the shift pin (35, 36 respectively) can move away through the latter aperture.

10. A gearbox according to claim 8 or 9, characterised in that the shift discs (37, 38) to be moved towards one another retain the actuation rods not actuated by the shift pin (35, 36 respectively) in an initial position and more particularly return the actuating rod moved lengthwise in a previous shifting into the initial position corresponding to the freewheel position of the associated longitudinally movable gears or gear clusters on the input shaft (1) and output shaft (2)

11. A gearbox according to any of claims 8 - 10, characterised in that the two shift discs (37, 38) are coupled by way of connecting links (42, 43) with a shift shaft (45) which is is rotatably mounted in the gearbox casing (44), extends therethrough to the outside and is connected to a shift lever (49) (shift mechanism).

12. A gearbox according to any of claims 8 - 11, characterised in that the shift discs (37; 38) on either side of the actuating rods (31 - 34) are so mounted on a shaft (47) which defines the common rotational axis (39) as to corotate with such shaft and to be movable lengthwise thereon, the shaft (46) being operatively connected by way of a worm or screw transmission (47, 48) to a preselector element, preferably in the form of a preselector lever (50).

13. A gearbox according to any of claims 1 - 12, characterised in that it has six or more stages, preferably eight stages.

**Revendications**

1. Boîte de vitesses à plusieurs rapports, notamment boîte de vitesses à présélection pour machines-outils telles que des machines rotatives ou similaires, avec un arbre primaire (1) et un arbre secondaire (2) s'étendant parallèlement à l'arbre primaire, arbres qui sont chacun équipés tant de roues d'engrenages fixes (3, 4, 5, 6; 7, 8, 9, 10) que de roues d'engrenages solidaires en rotation mais cependant déplaçables longitudinalement (13, 14, 15, 16; 17, 18, 19, 20), ces dernières étant déplaçables d'une position de roue libre à une position de changement de vitesse et vice-versa par des éléments de changement de vitesse associés (fourchettes de changement de vitesse 11, 12; 21, 22) de telle sorte qu'à chaque position de changement de vitesse, les roues d'une seule paire de roues d'engrenages (3, 16; 4, 15; 5, 14; 6, 13; 7, 20; 8, 19; 9, 18 ou 10, 17) -à savoir une roue d'engrenage fixe (3, 4, 5, 6, 7, 8, 9 ou 10) de l'arbre primaire (1) ou secondaire (2) et une roue d'engrenage montée déplaçable longitudinalement (13, 14, 15, 16, 17, 18, 19 ou 20) de l'autre arbre, à savoir l'arbre secondaire (2) ou primaire (1)- sont chaque fois en engrènement ou encore en prise, caractérisée en ce que les arbres primaire (1) et secondaire (2) sont réalisés selon un mode de construction identique et sont donc équipés selon le même ordre de succession des roues d'engrenages fixes ainsi que des roues d'engrenages solidaires en rotation mais déplaçables longitudinalement (3 ... 20), et en ce que les arbres (1, 2) de configuration constructive identique sont disposés dans le carter de boîte de vitesses (44) en symétrie réciproque.

2. Boîte de vitesses selon la revendication 1, caractérisée en ce que les roues d'engrenages (13 ... 20) montées déplaçables longitudinalement sur les arbres primaire (1) et secondaire (2) peuvent être bloquées à leur position de roue libre ainsi qu'à leurs positions de changement de vitesse par des moyens de crantage respectifs, et de préférence par un mécanisme de crantage à rotule (23, 24; 25, 26) d'un mode de construction connu.

3. Boîte de vitesses selon la revendication 1 ou 2, caractérisée en ce que les roues d'engrenages (13 ... 20) montées déplaçables longitudinalement sont respectivement déplaçables par paires sous la forme d'un train de roues, la position de roue libre d'un tel train de roues (respectivement 13, 14 ou 15, 16 ou 17, 18 ou 19, 20) se situant respectivement entre deux roues d'engrenages fixes associées (respectivement 5, 6 ou 3, 4 ou 9, 10 ou 7, 8) sur l'autre arbre (respectivement 1 ou 2).

4. Boîte de vitesses selon l'une quelconque des revendications 1 à 3, caractérisée en ce que des fourchettes de changement de vitesse (11, 12 ou 21, 22) servent d'éléments de changement de vitesse pour le déplacement des roues d'engrenages (13 ... 20) montées déplaçables longitudinalement sur les arbres primaire (1) et secondaire (2), fourchettes qui agissent dans des rainures périphériques (27, 28, 29, 30) respectivement associées aux roues d'engrenages ou trains de roues (13, 14; 15, 16; 17, 18; 19, 20) ou sur des nervures périphériques associées aux roues d'engrenages ou trains de roues monté(e)s déplaçables longitudinalement, et qui sont chacune, au moyen d'un mécanisme de présélection et de changement de vitesse, déplaçables individuellement en direction de l'arbre respectivement primaire (1) ou secondaire (2), en entraînant conjointement les roues d'engrenages ou encore les trains de roues correspondant(e)s.

5. Boîte de vitesses selon l'une quelconque des revendications 1 à 4, caractérisée en ce que sur chaque fourchette de changement de vitesse (11, 12, 21, 22) est fixée une barre d'actionnement (31, 32, 33, 34) s'étendant sensiblement parallèlement à l'arbre respectivement primaire (1) ou secondaire (2), laquelle peut être sollicitée axialement par un organe de changement de vitesse se présentant de préférence sous la forme d'un pivot ou encore d'une tige de changement de vitesse (35; 36), qui déplace la barre dans son sens longitudinal et entraîne ainsi conjointement la fourchette de changement de vitesse ainsi que les roues d'engrenages qui lui sont associées (trains de roues 13, 14; 15, 16; 17, 18 ou 19, 20).

6. Boîte de vitesses selon la revendication 5, caractérisée en ce que les barres d'actionnement (31, 32, 33, 34) se situent, vues dans leur sens longitudinal, à même distance angulaire les unes des autres sur un cercle imaginaire commun, et en ce qu'une tige de changement de vitesse (35; 36) est respectivement disposée de chaque côté des barres d'actionnement (31 ... 34), les deux tiges de changement de vitesse (35; 36) se situant sur le même cercle imaginaire que les barres d'actionnement (31 ... 34) et étant déplaçables par pas en avant ou en arrière le long de ces dernières par un mécanisme de présélection.

7. Boîte de vitesses selon la revendication 6, caractérisée en ce que les deux tiges de changement de vitesse (35; 36) sont décalées l'une par rapport à l'autre de la moitié de la distance angulaire entre deux barres d'actionnement (31 ... 34) voisines, et peuvent être déplacées plus loin de cette distance angulaire à chaque pas de changement de vitesse, et ce notamment également pendant le fonctionnement da la boîte de vitesses.

8. Boîte de vitesses selon la revendication 5 ou 6, caractérisée en ce que les deux tiges de changement de vitesse (35; 36) sont chacune disposées sur un disque ou encore un tambour de changement de vitesse monté rotatif (37; 38), dont l'axe de rotation commun (39) coïncide avec l'axe du cercle imaginaire sur lequel se situent -vues dans le sens de leurs axes longitudinaux- les barres d'actionnement (31 ... 34), les disques de changement de vitesse (37; 38) pouvant, par un mécanisme de changement de vitesses, être déplacés respectivement en rapprochement ou en éloignement l'un de l'autre dans le sens de leur axe de rotation commun (39), de sorte qu'une des deux tiges de changement de vitesse (35; 36) peut être amenée en prise avec la barre d'actionnement respectivement sélectionnée en la déplaçant dans le sens longitudinal, tandis que la tige de changement de vitesse disposée en vis-à-vis va dans le vide entre deux barres d'actionnement voisines, ou encore que les tiges de changement de vitesse (35; 36) atteignent leur position sélectionnée.

9. Boîte de vitesse selon la revendication 8, caractérisée en ce qu'à chaque tige de changement de vitesse (respectivement 35 ou 36) est associée, sur le disque de changement de vitesse disposé en vis-à-vis (respectivement 38 ou 37), une ouverture, de préférence un alésage traversant (respectivement 40 ou 41), à travers laquelle peut s'échapper la barre d'actionnement respective (31, 32, 33 ou 34) déplacée par la tige de changement de vitesse (respectivement 35 ou 36).

10. Boîte de vitesses selon la revendication 8 ou 9, caractérisée en ce que les disques de changement de vitesse (37, 38) maintiennent à une position initiale les barres d'actionnement qui ne sont pas sollicitées par la tige de changement de vitesse (respectivement (35 ou 36), et notamment ramènent à la position initiale la barre d'actionnement qui avait été déplacée longitudinalement à une position de changement de vitesse antérieure, cette position initiale correspondant à la position de roue libre des roues d'engrenages ou traits de roues respectivement associé(e)s, monté(e)s déplaçables longitudinalement sur les arbres primaire (1) et secondaire (2).

11. Boîte de vitesses selon l'une quelconque des revendications 8 à 10, caractérisée en ce que les deux disques de changement de vitesse (37, 38) sont accouplés par l'intermédiaire de pattes d'assemblage (42, 43) à un arbre de changement de vitesse (45) monté rotatif dans le carter de boîte de vitesses (44), arbre qui est guidé hors du carter de boîte de vitesses (44) et est relié à un levier de changement de vitesse (49) (qui constitue ledit mécanisme de changement de vitesse).

12. Boîte de vitesses selon l'une quelconque des revendications 8 à 11, caractérisée en ce que les disques de changement de vitesse (37; 38) disposés des deux côtés des barres d'actionnement (31 à 34) sont montés solidaires en rotation mais déplaçables longitudinalement sur un arbre (46) constituant l'axe de rotation commun (39), cet arbre (46) étant relié opérationnellement, par l'intermédiaire d'un engrenage à vis sans fin ou hélicoïdal (47, 48), à un organe de présélection se présentant de préférence sous la forme d'un levier de présélection (50).

13. Boîte de vitesses selon l'une quelconque des revendications 1 à 12, caractérisée en ce qu'il s'agit d'une boîte de vitesses à six rapports et plus, de préférence à huit rapports.

Fig. 1

Fig. 2

Fig. 3

Fig. 4